Europäisches Patentamt

European Patent Office

Office européen des brevets

(11) Veröffentlichungsnummer: **0 243 941**
**A2**

(12) # EUROPÄISCHE PATENTANMELDUNG

(21) Anmeldenummer: 87106166.9

(22) Anmeldetag: 28.04.87

(51) Int. Cl.4: **G01S 13/14**

(30) Priorität: 02.05.86 DE 3614850

(43) Veröffentlichungstag der Anmeldung:
04.11.87 Patentblatt 87/45

(84) Benannte Vertragsstaaten:
CH DE FR GB LI NL

(71) Anmelder: Honeywell Regelsysteme GmbH
Kaiserleistrasse 55
D-6050 Offenbach am Main(DE)

(72) Erfinder: Drefahl, Dieter, Dr.
Pferdslache 13
D-6450 Hanau(DE)

(74) Vertreter: Herzbach, Dieter et al
Honeywell Europe S.A. Holding KG Patent-
und Lizenzabteilung Kaiserleistrasse 55
Postfach 184
D-6050 Offenbach am Main(DE)

(54) Verfahren zur Ermittlung des Abstandes eines Objektes und Schaltungsanordnung zur Durchführung des Verfahrens.

(57) Zur Erfassung des Abstandes eines Objektes wird während der Abstrahlung des Sendesignales ein erster Kondensator (C1) über einen Schalter (So) kurzgeschlossen und anschließend aus einer Konstantstromquelle (Ic) aufgeladen. Beim Empfang eines Echosignales wird die Ladung auf einen zweiten Kondensator (C2) übertragen, indem während des Empfangssignales ein Schalter (S1) geschlossen wird. Die auf dem Kondensator (C2) gespeicherte zeitproportionale Ladung wird als Abstandssignal über einen Tiefpaß (D1,D2, C3) mit spannungsabhängigem Widerstand als Ausgangsspannung (Ua) ausgegeben.

Fig. 1

EP 0 243 941 A2

## Schaltungsanordnung zur Ermittlung des Abstandes eines Objektes

Die vorliegende Erfindung bezieht sich auf eine Schaltungsanordnung zur Ermittlung des Abstandes eines Objektes nach dem Gattungsbegriff der unabhängigen Patentansprüche.

Eine derartige Schaltungsanordnung ist aus der DE-PS 701 991 bekannt. Dort wird ein periodisch entladbarer Kondensator aus einer Spannungsquelle aufgeladen, und es wird die zwischen Aussendung eines Impulses und Empfang eines Echoimpulses gespeicherte Ladung nach Übertragung auf einen weiteren Kondensator zur Anzeige gebracht. Bei mehrfachen Echos und starken Meßwertschwankungen konvergiert bei der bekannten Schaltungsanordnung der angezeigte Wert nur langsam auf den tatsächlichen Wert.

Es ist daher die Aufgabe der vorliegenden Erfindung, eine Schaltungsanordnung anzugeben, bei der auch bei stark schwankenden Meßwerten die entsprechende Ausgangsspannung rasch diesen Meßwerten folgt. Die Lösung dieser Aufgabe gelingt gemäß den kennzeichnenden Merkmalen der unabhängigen Patentansprüche. Ausgestaltungen der erfindungsgemäßen Schaltungsanordnung sind den Unteransprüchen entnehmbar.

Die Schaltungsanordnung gemäß der Erfindung zeichnet sich durch die Umladung des Meßsignales zwischen mindestens zwei Kondensatoren aus, wobei der zweite Kondensator Teil eines Tiefpasses bildet. Gemäß einer bevorzugten Ausgestaltung ist der Widerstand des Tiefpasses als spannungsabhängiger Widerstand ausgebildet, der für kleine Spannungen einen hohen Wert und für große Spannungen einen geringen Wert besitzt. Hierdurch werden vorteilhaft große Meßwertänderungen weitergereicht, während Rauschsignale mit geringer Amplitude geglättet werden. Durch die Verwendung eines Zwischenkondensators und eine entsprechende Schalterbetätigung erhält man zudem die Möglichkeit, nur bestimmte Echos auszuwerten.

Anhand der Figuren der beiliegenden Zeichnung sei im folgenden eine Schaltungsanordnung gemäß der Erfindung erläutert. Es zeigen:

Fig. 1 eine Schaltungsanordnung zur Abstandsmessung;

Fig. 2a - 2c Diagramme zur Erläuterung der Wirkungsweise eines Teils der Schaltungsanordnung gemäß Fig. 1; und

Fig. 3a, 3b Diagramme zur Erläuterung der Wirkungsweise eines weiteren Teils der Schaltungsanordnung gemäß Fig. 1.

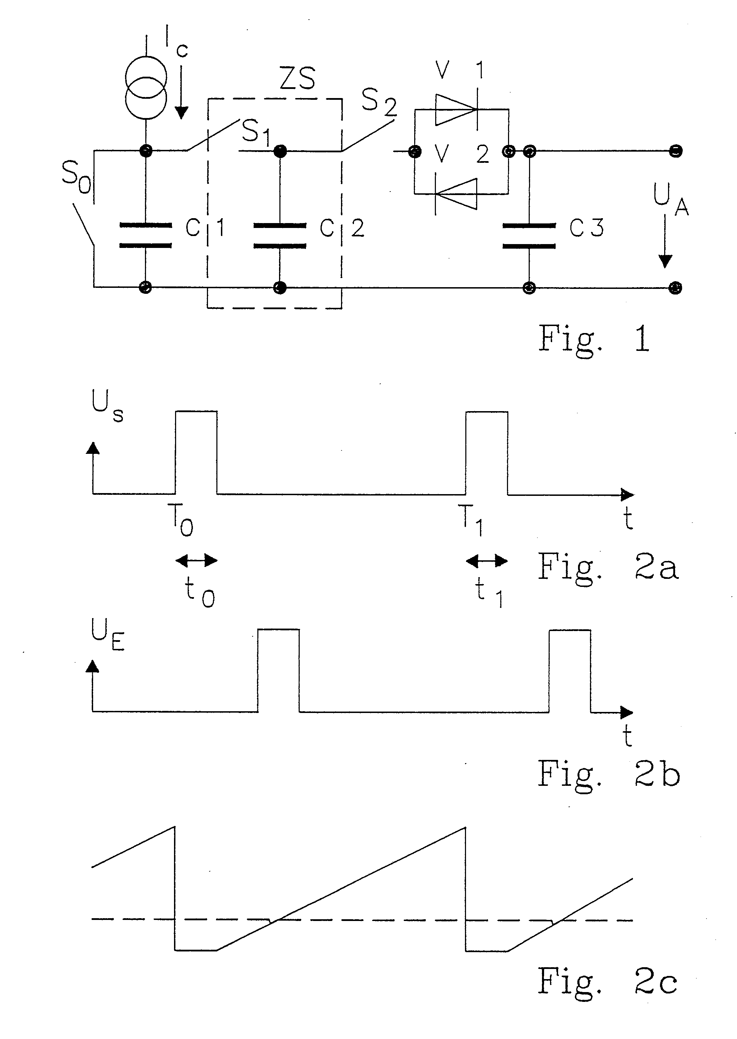

Gemäß den Fig. 1 und 2a wird im Zeitpunkt $T_0$ für die Dauer $t_0$ der Abstrahlung eines Sendeimpulses bzw. einer Sendeimpulsgruppe $U_S$ ein Kondensator C1 über einen parallelgeschalteten Schalter S0 kurzgeschlossen und somit seine Spannung auf 0 Volt gesetzt. Anschließend wird der Schalter S0 geöffnet und somit der Kurzschluß des Kondensators C1 aufgehoben. Eine an den Kondensator C1 angeschlossene Konstantstromquelle Ic lädt somit diesen mit einer zeitlinear ansteigenden Spannung auf.

Beim Empfang eines Echosignales $U_E$ gemäß Fig. 2b wird während der Empfangszeit ein elektrischer Schalter S1 zwischen dem Kondensator C1 und einem weiteren Kondensator C2 geschlossen. Dieser weitere Kondensator C2 habe von der vorhergehenden Messung die Ladespannung V2a, so daß -ein genügend kleiner Widerstand zwischen C1 und C2 vorausgesetzt - ein sofortiger Ladungsausgleich stattfindet. Mit den Kapazitäten C1 und C2 für die beiden Kondensatoren liegt dann am Ende des empfangenen Echos an beiden Kondensatoren folgende Spannung an:

$$\overline{V1} = \overline{V2} \; \frac{C1 \cdot V1 + C2 \cdot V2a}{C1 + C2}$$

Auf diese Weise erhält man eine exponentielle Glättung erster Ordnung zwischen aufeinanderfolgenden Messungen, wobei der Glättungskoeffizient durch die Wahl der Kapazitäten C1 und C2 der beiden Kondensatoren vorgegeben ist. Will man ungewollte Glättungen, d. h. Glättungen starker Meßwertschwankungen vermeiden, so ist zweckmäßigerweise der Kondensator C1 sehr viel größer als der Kondensator C2 zu wählen.

Nach Beendigung des ersten Empfangszyklusses wird wieder ein Sendesignal zum Zeitpunkt T1 während der Zeit t1 angelegt. Während dieser Zeit wird nun ein weiterer elektronischer Schalter S2 zwischen dem Kondensator C2 und einem dritten Kondensator C3 geschlossen. Dieser dritte Kondensator C3 habe vom vorangegangenen Meßzyklus die Ladespannung V3a, so daß bei kleinem Widerstand zwischen den Kondensatoren C2 und C3 ein Ladungsausgleich gemäß folgender Beziehung stattfindet:

$$\overline{V3} = \overline{\overline{V2}} = \frac{C2 \cdot \overline{V2} + C3 \cdot V3a}{C2 + C3}$$

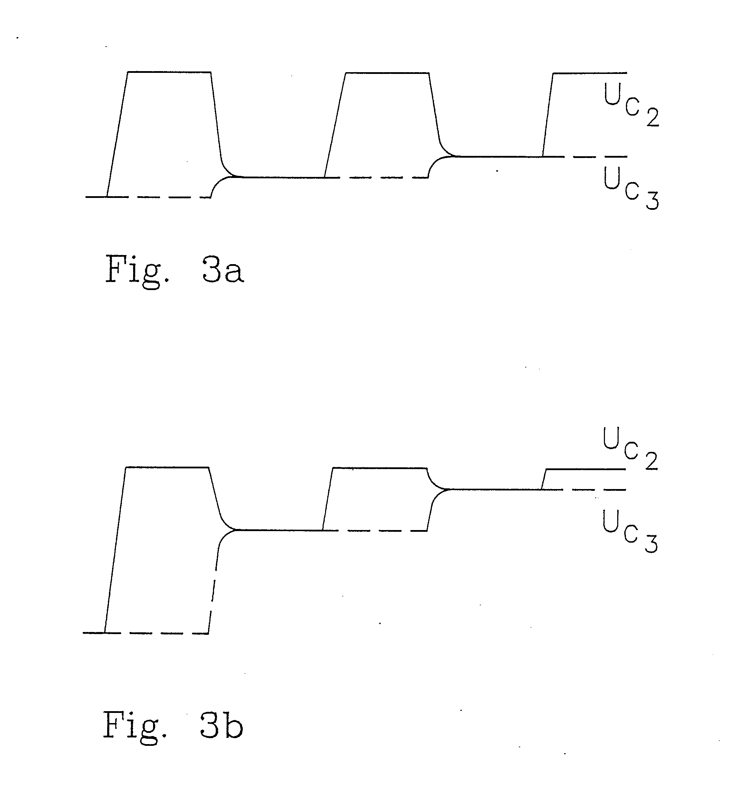

Der dritte Kondensator C3 bildet einen Teil eines Tiefpasses. Dies hat z. B. den Vorteil, daß höherfrequente Rauschsignale ausgefiltert werden. Zugleich werden jedoch auch starke Meßwertschwankungen weggefiltert und die Ausgangsspannung Ua konvergiert nur langsam zu dem Meßwert, wie dies aus Fig. 3a hervorgeht, wo die ausgezeichnete Linie die Spannung an dem Kondensator C2 und die gestrichelte Linie die Ausgangsspannung an dem Kondensator C3 darstellt. Bei dieser einfachen exponentiellen Glättung konvergiert die Ausgangsspannung nur langsam zu dem eigentlichen Meßwert.

Fügt man jedoch anstelle eines Ohm'schen Widerstandes zwischen den Kondensator C2, den Schalter S2 und den Kondensator C3 einen spannungsabhängigen Widerstand D1, D2 ein, dessen Widerstand bei wachsender Spannung sinkt, so kann während der Schließzeit des Schalters S2 nur bei kleinem Widerstand ein voller Ladungsausgleich erfolgen. Dies ist aber definitionsgemäß nur bei großem |V3a - $\overline{V2}$ | der Fall; d. h. bei starken Meßwertschwankungen wird ein schneller Spannungsausgleich erfolgen. Dies ist in Fig. 3b dargestellt, wo wiederum die ausgezogene Linie die Spannung an dem Kondensator C2 und die gestrichelte Linie die Ausgangsspannung an dem Kondensator C3 darstellt. Man erkennt, daß bei dieser adaptiven exponentiellen Glättung die Ausgangsspannung sehr schnell zu der Meßwertspannung konvergiert. Sinkt während des Spannungsausgleichs die Differenzspannung |V3a - $\overline{V2}$ | oder ist die Differenzspannung von vornherein klein, wie dies bei Rauschsignalen der Fall ist, so kann wegen des definitionsgemäß hohen Widerstandes des Tiefpasses während der Schließzeit des Schalters S2 nur ein unvollständiger Ladungsausgleich gemäß folgender Beziehung stattfinden:

$$\overline{V3} = \overline{V3a} + \alpha \bullet (\overline{V2} - V3a) \text{ mit } 0 < \alpha < 1$$

Wählt man für den spannungsabhängigen Widerstand z.B. zwei antiparallele Dioden, deren Widerstand bei einer Spannung unterhalb 0,7 Volt stark zunimmt, so erhält man für Meßwertänderungen über 0,7 V eine schnelle Sprungantwort des Ausgangssignals; für Meßwertänderungen unterhalb von 0,7 V hingegen eine starke exponentielle Glättung.

Im Prinzip ist die Schaltungsanordnung gemäß Fig. 1 ohne die gestrichelt eingerahmte Zwischenschaltung ZS funktionsfähig. In diesem Fall wäre der Kondensator C1 über den Schalter S2 direkt an den Tiefpaß D1, D2, C3 anzuschließen, um durch Betätigung des Schalters S2 beim Empfang eines Echos eine abstandsproportionale Ausgangsspannung Ua zu erzeugen. Durch die Einführung des Zwischenkondensators C2 und des zusätzlichen Schalters S1 ergibt sich jedoch eine einfache Möglichkeit, nur bestimmte Echos auszuwerten. Existieren neben dem ersten Echo noch weitere Echos zwischen dem Aussenden zweier Sendesignale, so kann man den Schalter S1 durch einen Zähler ansteuern, der nur jedes n-te Echo durchschaltet. Besonders einfach lassen sich hierbei Extremwerte auswerten, z. B. das erste und das letzte Echo.

Im ersten Fall wird der Schalter S1 nach dem Empfang des ersten Echos für die gesamte restliche Empfangszeit gesperrt. Im zweiten Fall wird einfach während aller empfangenen Echos der Schalter S1 durchgeschaltet. Dann liegt an dem Kondensator C2 am Ende der Empfangszeit folgende Spannung an:

$$\overline{V2} = \frac{C1 \cdot V1n + C2 \, V2a}{C1 + C2}$$

In dieser Gleichung stellt V1n die während des n-ten Echos anliegende Spannung an dem durch die Konstant stromquelle Ic aufgeladenen Kondensator C1 dar. Die an dem Kondensator C2 am Ende der Empfangszeit anliegende Spannung $\overline{V2}$ kann sodann über den adaptiven Tiefpaß D1, D2, C3 beim Aussenden des nächsten Sendesignales durch Schließen des Schalters S2 als Ausgangsspannung Ua ausgegeben werden.

**Ansprüche**

1. Schaltungsanordnung zur Ermittlung des Abstandes eines Objektes von einem Sender/Empfänger durch Aussenden eines Signales und Messung der Laufzeit bis zum Empfang des reflektierten Signales, wobei die Laufzeit dem Abstand proportional ist, mit einem aus einer Quelle aufladbaren ersten Kondensator (C1), dessen Ladungsdifferenz zwischen Signalaussendung und Signalempfang ein Maß für die Entfernung darstellt und mit einem ersten Schalter (S0) zur Entladung des Kondensators in vorgegebenen Zeitabständen sowie einem zweiten Schalter (S2) zur Übertragung der Ladung des ersten Kondensators (C1) auf einen hierzu parallelgeschalteten zweiten Kondensator (C3), **dadurch gekennzeichnet,** daß der zweite Kondensator (C3) Teil eines Tiefpasses bildet.

2. Schaltungsanordnung nach Anspruch 1, **dadurch gekennzeichnet,** daß der Widerstand des Tiefpasses ein spannungsabhängiger Widerstand ist.

3. Schaltungsanordnung nach Anspruch 2, **dadurch gekennzeichnet,** daß der spannungsabhängige Widerstand aus der Antiparallelschaltung zweier Dioden (D1, D2) besteht.

4. Schaltungsanordnung zur Ermittlung des Abstandes eines Objektes von einem Sender/Empfänger durch Aussenden eines Signales und Messung der Laufzeit bis zum Empfang des reflektierten Signales, wobei die Laufzeit dem Abstand proportional ist, mit einem aus einer Quelle aufladbaren ersten Kondensator (C1), dessen Ladungsdifferenz zwischen Signalaussendung und Signalempfang ein Maß für die Entfernung darstellt und mit einem ersten Schalter (S0) zur Entladung des Kondensators in vorgegebenen Zeitabständen sowie einem zweiten Schalter (S1) zur übertragung der Ladung des ersten Kondensators (C1) auf einen hierzu parallelgeschalteten zweiten Kondensator (C2), **gekennzeichnet durch** einen dritten über einen dritten Schalter (S2) und einen spannungsabhängigen Widerstand (D1, D2) dem zweiten Kondensator (C2) parallelschaltbaren Kondensator (C3), wobei der zweite Schalter (S1) beim Empfang des reflektierten Signales geschlossen wird und der dritte Schalter (S2) beim nächstfolgenden Sendesignal geschlossen wird.

5. Schaltungsanordnung nach Anspruch 4, **dadurch gekennzeichnet,** daß der dritte Kondensator (C3) größer als der zweite Kondensator (C2) und der zweite Kondensator (C2) größer als der erste Kondensator (C1) ist.

6. Schaltungsanordnung nach Anspruch 1 oder Anspruch 4, **dadurch gekennzeichnet,** daß der erste Schalter (S0) bei der Erzeugung des Sendesignales kurzfristig geschlossen wird und der erste Kondensator (C1) aus ener Konstantstromquelle (Ic) aufladbar ist.

Fig. 1

Fig. 2a

Fig. 2b

Fig. 2c

Fig. 3a

Fig. 3b